# EUROPEAN PATENT APPLICATION

(11) **EP 3 756 857 A1**
(43) Date of publication of application: **30.12.2020**
(21) Application number: 19183399.5
(22) Date of filing: 28.06.2019
(51) Int. Cl.: B29C 64/118, B33Y 10/00, B33Y 70/00, B29K 71/00, B29K 105/00

(54) **ADDITIVE MANUFACTURING PROCESS FOR COMPOSITIONS COMPRISING POLY-ARYL-ETHER-KETONE(S)**

(71) Applicant: ARKEMA FRANCE, 92700 Colombes (FR)
(72) Inventor: REBER, Roderick, King of Prussia, PA 19406 (US); LIU, David, King of Prussia, PA 19406 (US); FISHER, Evan, Malvern, PA 19355 (US)
(74) Representative: Arkema Patent

(57) **Abstract**

An additive manufacturing process by extrusion for forming a three-dimensional part in an additive manufacturing machine having a build environment, the process comprising:
- i) providing a composition comprising at least one poly-aryl-ether-ketone (PAEK) having a melt viscosity from about 200 Pa.s to about 1500 Pa.s, according to ASTM D3835-16, measured at a temperature of 320°C and at a shear rate of 100 s⁻¹, by capillary rheology using a 1 mm diameter, 15 mm long die;
- ii) extruding the composition in the build environment at an extrusion temperature equal to about 340°C or less , to form an extruded part section; and,
- iii) cooling the extruded part section in the build environment.

A filament and its use in said additive manufacturing process and the corresponding object obtainable from said additive manufacturing process are also disclosed.

## Description

### TECHNICAL FIELD

The present invention relates to material extrusion additive manufacturing processes, including fused filament fabrication, which may be used to manufacture improved parts, devices, and prototypes using a composition comprising one or more poly-aryl-ether-ketones.

### TECHNICAL BACKGROUND

Material extrusion additive manufacturing are processes that may be used to manufacture devices, parts, and prototypes. Material extrusion additive manufacturing includes fused filament fabrication ("FFF") processes and material extrusion processes, which are used interchangeably herein unless otherwise noted.

Fused Filament Fabrication is a widely adopted additive manufacturing technique. Part of the appeal of Fused Filament Fabrication is its relative simplicity in implementation. A basic printer requires only a few electrical motors and a heated nozzle. A wide range of Fused Filament Fabrication or other extrusion printers are currently commercially available ranging from consumer models that only cost a few hundred dollars to sophisticated industrial machines capable of consistently producing large objects from advanced materials with high levels of reliability and repeatability. As with any piece of mechanical equipment, increasing complexity and robustness is usually accompanied with increased cost and maintenance.

For many applications, it is desirable to create objects using Fused Filament Fabrication, out of high performance thermoplastic polymers such as poly-aryl-ether-ketones. Generally speaking, these materials are preferred because of some combination of strength, toughness, heat resistance, UV resistance, chemical resistance, low flammability, or other desirable physical property. However, as explained below, the compositions comprising poly-aryl-ether-ketone(s) suitable for FFF, presently available, require high extrusion temperatures and above all high build environment temperatures. This results in a need to use expensive printers specially adapted for these high temperatures conditions.

In Fused Filament Fabrication, a layer of molten polymer is deposited and then cools to the build environment chamber temperature. Since materials typically expand when heated and contract when cooled, there is a natural tendency for this deposited polymer layer to contract as it cools to be in equilibrium with the build environment temperature. Below the polymer's glass transition temperature, the thermal contraction results in a stress since the layer is physically attached to a previous layer or to a support. As subsequent layers are deposited, the stress can result in a part warping from the build surface, resulting in a failed print and/or poor dimensional tolerances.

Therefore, to prevent warping, the build environment generally needs to be kept at a relatively high temperature, typically over 100°C, ideally close to the glass transition temperature of the compositions comprising poly-aryl-ether-ketone(s).

In order to protect the electronic and mechanical components from the high temperatures within the build environment, the printers require complicated engineering solutions such as active liquid cooling or physical isolation of the build environment from the mechanics of the printer. A heated build environment requires a temperature control system and method to circulate air ensuring a consistent temperature. Additionally, special care must be taken to select the proper materials and construction of the parts exposed the high temperature and thermal cycling in and near the build environment. A heated build environment, although desirable in some cases, adds to the overall cost and complexity of such a printer.

The present invention is directed to an additive manufacturing process by extrusion to form three-dimensional parts using a composition comprising poly-aryl-ether-ketone(s), which may be carried out at a lower extrusion temperature and/or lower build environment temperature than the processes presently used for compositions currently available. The process according to the invention may beused in a wider range of Fused Filament Fabrication processes or other extrusion processes. In some embodiments, the process according to the invention may be carried out using relatively low cost, affordable printers, working at lower extrusion temperatures and build temperatures, than printers specially adapted to print compositions comprising poly-aryl-ether-ketone(s) currently available.

The present invention also is directed to a filament and its use in an additive manufacturing process by extrusion and the objects produced using the process(es) according to the invention.

### SUMMARY

One object of the invention is directed to an additive manufacturing process by extrusion for forming a three-dimensional part in an additive manufacturing machine having a build environment, the process comprising:
- i) providing a composition comprising at least one poly-aryl-ether-ketone (PAEK) having a melt viscosity from about 200 Pa.s to about 1500 Pa.s, according to ASTM D3835-16, measured at a temperature of 320°C and at a shear rate of 100 s⁻¹, by capillary rheology using a 1 mm diameter, 15 mm long die;
- ii) extruding the composition in the build environment at an extrusion temperature equal to about 340°C or less, to form an extruded part section; and,
- iii) cooling the extruded part section in the build environment.
The range of melt viscosities of the composition comprising at least one poly-aryl-ether-ketone (PAEK) enables the process to be run at a relatively low extrusion temperatures, namely a temperature equal to about 340°C or less, and at a relatively low build environment temperature. The ability to successfully produce useable parts having acceptable properties and desirable characteristics using the novel processing conditions and steps of the invention, which are quite different compared to what is generally presently carried out in typical processes , was surprising and unexpected. For example, a three-dimensional part having a correct dimensioning and substantially no warping may be produced. Thus, the process of the invention may be carried out using a wide range of Fused Filament Fabrication or other extrusion printers, such as for example printers which are generally considered to be suitable for printing polylactic acid (PLA) or acrylonitrile butadiene styrene (ABS).
The inventors surprisingly discovered that if the melt viscosity of the composition, measured at 320°C and at a shear rate of 100 s⁻¹ by capillary rheology using a 1 mm diameter, 15 mm long die, is more than about 1500 Pa.s, flow through a nozzle able to extrude at a temperature equal to about 340°C or less may be inconsistent, and layer adhesion of the part under construction may be poor. The inventors also discovered that if the melt viscosity of the composition is less than about 200 Pa.s, it may be difficult to extrude filament with a consistent diameter, as the polymer melt becomes too fluid. As the molecular weight further decreases, polymeric materials tend to have reduced mechanical properties, often becoming weak and brittle. Although it is not an absolute limit, the inventors found the viscosity value of about 200 Pa.s to be a suitable lower boundary.

As used herein, the term "glass transition temperature", also referred to herein as "Tg", means the temperature over which a glass transition takes place, that is amorphous regions of a polymer go from a hard and relatively brittle condition to a viscous or rubbery condition, or vice-versa. It can be measured by Differential Scanning Calorimetry according to ISO 11357-2, by using a heating rate of 20°C/min. Unless otherwise indicated, the glass transition temperature is a half-step height glass transition temperature. Compositions comprising PAEK(s) may optionally have several glass transition temperatures measured by DSC analysis, for instance due to the presence of several PAEKs having different glass transition temperatures. In that case, the term "glass transition temperature" means the highest glass transition temperature of the composition.

As used herein, "pseudo-amorphous" polymers comprise polymers having from 0% crystallinity to less than about 7% crystallinity as determined by X-ray diffraction (XRD). For instance, X-ray diffraction data may be collected with copper K-alpha radiation at 0.5 deg/min for two-theta angles ranging from 5.0° to 60.0°. The step size used for data collection should be 0.05° or lower. The diffractometer optics should be set as to reduce air scattering in the low angle region around 5.0° two-theta. Crystallinity data may be calculated by peak fitting X-ray patterns and taking into account crystallographic data for the polymer of interest. A linear baseline may be applied to the data between 5° and 60°.
For example, pseudo-amorphous polymers as discussed herein may be below about 7% crystallinity, preferably below about 5% crystallinity, more preferably below about 3% crystallinity. As used herein, "semi-crystalline" polymers comprise polymers having at least about 3% crystallinity as determined by X-ray diffraction. Semi-crystalline polymers as discussed herein may comprise at least about 5% crystallinity or at least about 7% crystallinity, with a preference of at least about 5% crystallinity.

Pseudo-amorphous polymers may be crystallizable, that is capable of forming one or more regions that are crystalline upon a heat treatment above their glass transition temperature.

As used herein, the term "melt temperature", also ireferred to herein as "Tm", means the temperature over which a transition stage between a fully crystalline or partially crystalline solid state and an amorphous liquid of variable viscosity occurs. It can be measured by Differential Scanning Calorimetry (DSC), according to ISO 11357-3, by locating the peak of melt temperature of the first heat using a heating rate of 20°C/min.

Unless otherwise indicated, the melt temperature is a peak melt temperature. The composition comprising PAEK(s) may optionally have several melt temperatures measured by DSC analysis, for instance due to the presence of different crystalline forms for a given PAEK and / or due to the presence of several kinds of PAEKs. In that case, the term "melt temperature" means the highest melt temperature of the composition.

As used herein, the term "half-time crystallization at a measurement temperature" means the time necessary to reach a relative crystallinity of 0.5 for an isothermal crystallization at the measurement temperature, as defined according to standard NF EN ISO 11357, Part 7.

As used herein, the term "melt viscosity" means the viscosity as measured at a temperature of 320°C and at a shear rate of 100s⁻¹, by capillary rheology using a 15 mm long and 1mm in diameter die, according to ASTM D3835-16. It is expressed in Pa.s.

As used herein, the term "inherent viscosity" means the viscosity as measured in in an aqueous solution of 96% by weight of sulfuric acid at 25°C, according to ISO 307. The inherent viscosity is expressed in dL/g.

As used herein, the term "Coefficient of linear Thermal Expansion", abbreviated "CTE", is measured according to ISO 11359-2 between -100°C and the glass transition temperature of the composition by DMA in tension. It is expressed in K⁻¹. RSA-G2 available from the company TA Instruments may be used for the Dynamic Mechanical Analysis (DMA).

As used herein, the term "a" in reference to a chemical compound refers to one or more molecules of said chemical compound. In addition, the one or more molecules may or may not be identical, so long as they fall under the category of the chemical compound. Thus, for example, "a" poly-aryl-ether-ketone is interpreted to include one or more molecules of polymer of poly-aryl-ether-ketone, where the molecules may have different chemical formula, including isomers, and/or different molecular weights.

As used herein, the terms "at least one" and "one or more of" an element are used interchangeably, and have the same meaning that includes a single element and a plurality of the elements, and may also be represented by the suffix "(s)" at the end of the element.

As used herein and in the claims, the terms "comprising" and "including" are inclusive or open-ended and do not exclude additional unrecited elements, compositional components, or method steps. Accordingly, the terms "comprising" and "including" encompass the more restrictive terms "consisting essentially of and "consisting of."

As used herein, each compound may be discussed interchangeably with respect to its chemical formula, chemical name, abbreviation, etc. For example, PEKK may be used interchangeably with poly-ether-ketone-ketone. Additionally, each compound described herein, unless designated otherwise, includes homopolymers and copolymers. The term "copolymers" is meant to include polymers containing two or more different monomers and may include, for example, polymers containing two, three or four different repeating monomer units.

As used herein, the term "polymer blend" means a macroscopically homogeneous polymer composition. The term also encompasses such compositions composed of immiscible phases with each other and dispersed at a micrometric scale.

As used herein, the "Z-axis" corresponds to the layer-printing direction of a 3D part. On the contrary, "X-axis" and "Y-axis" correspond to the plan in which the layers are printed.

In some embodiments, the melt viscosity of the composition is from about 400 to about 1100 Pa.s, preferably from 400 to 1100 Pa.s.

In some embodiments, the composition is extruded at a temperature of about 330°C or less, and preferentially about 320°C or less. The extrusion temperature preferably is not less than about 300°C, more preferably not less than 300 °C.

In some embodiments, the melt temperature of the composition is from about 290°C to about 320°C, as measured according to ISO 11357, section 3.

In some embodiments, the composition has a crystallization half-time at Tg+55°C, as measured according to ISO 11357, section 7, from about 1 minute to about 60 minutes; wherein Tg is the glass transition temperature of the composition, as measured according to ISO 11357, section 2.

If the crystallization half-time of the composition at Tg+55°C is more than about 60 minutes, any post print crystallization process would be prohibitively long. Pure PAEK compositions typically have a minimum crystallization half-time of less than 60 minutes. If the crystallization half-time of the composition at Tg+55°C is less than 1 minute, it may crystalize upon cooling, resulting in warping or poor layer adhesion.

The crystallization half-time of the composition at Tg+55°C is preferably from about 3 minutes to about 45 minutes, and even more preferably from about 5 minutes to about 30 minutes;
In some embodiments, the additive manufacturing machine does not contain any means for actively heating the build environment. In these embodiments, the temperature of the build environment is kept relatively low during the process compared to processes from the prior art in which the build environment is actively heated, typically at temperatures over 100°C.

In some embodiments, the temperature of the build environment during the process does not exceed 85°C, preferably does not exceed 70°C, and even more preferably does not exceed 60°C.

In some embodiments, the additive manufacturing machine contains a print bed placed in the build environment, which is suitable for supporting the three-dimensional part under construction and suitable for adhering to it. The temperature of the print bed during at least part of the process is:
- from about Tg-60°C to about Tg+5°C;
- preferably from about Tg-30°C to about Tg;
- and even more preferably from about Tg-20°C to about Tg-5°C;
wherein Tg is the glass transition temperature of the composition, as measured according to ISO 11357, section 2.

A heated print bed enables the print of most polymers successfully because it promotes adhesion of the first extruded layer and minimizes the effects of contraction upon cooling since the first layer can be maintained at a high temperature for the entire build process. Heating the print bed advantageously enables that the thermal stresses upon cooling do not directly result in the under construction part lifting from the build surface.

In some embodiments, the at least one poly-aryl-ether-ketone represents at least 50% to up to 100% by weight of the composition. Preferably, the at least one poly-aryl-ether-ketone represents at least 75%, or at least 80%, or at least 85%, or at least 90%, or at least 92.5%, or at least 95%, or at least 97.5%, or at least 98%, or at least 98.5%, or at least 99%, or at least 99.5%, or 100 %, by weight of the total weight of the composition. In some preferred embodiments, the composition comprises, consists essentially, or consists of at least 50%, or at least 75%, or at least 80%, or at least 85%, or at least 90%, or at least 92.5%, or at least 95%, or at least 97.5%, or at least 98%, or at least 98.5%, or at least 99%, or at least 99.5%, or 100 % poly-aryl-ether-ketone,

In some embodiments, the at least one poly-aryl-ether-ketone is a random poly-ether-ketone-ketone copolymer. It essentially consists of, preferably consists of, two monomeric units having the formula: 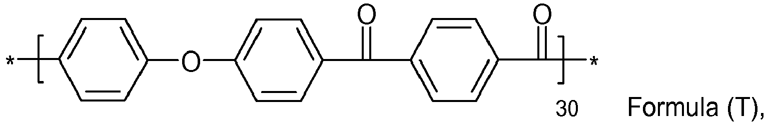 and 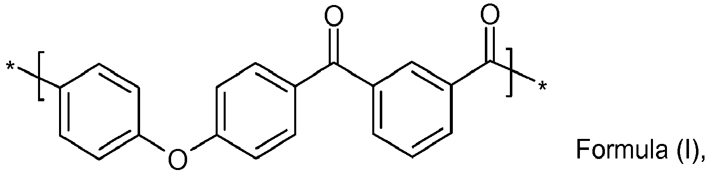
wherein the copolymer has a T:I ratio of from 55:45 to 65:35;
preferably, wherein the copolymer has a T:I ratio of from 58:42 to 62:38;
and even more preferably, wherein the copolymer has a T:I ratio of about 60:40.
In some embodiments, the inherent viscosity of the latter composition, as measured according to ISO 307 in an aqueous solution of 96% by weight sulfuric acid at 25°C, is from about 0.1 to about 0.7 dL/g; preferably from about 0.15 to about 0.5 dL/g; and more preferably from about 0.2 to about 0.4 dL/g.

In some embodiments, the at least one poly-aryl-ether-ketone is a poly[(ether-ether-ketone)-ran-(ether-biphenyl-ether-ketone)] which essentially consists of, preferably consists of:
- unit(s) of formula : Ph-O-Ph-O-Ph-C(O)- and,
- unit(s) of formula : Ph-O-Ph-Ph-O-Ph-C(O)-,
wherein Ph is a phenylene group and -C(O)- is a carbonyle group, and wherein each one of the phenylene group may independently be ortho-, meta- or para-substituted, preferentially meta- or para-substituted.

In some embodiments, the composition comprises, consists essentially of, and preferentially consists of:
- the at least one poly-aryl-ether-ketone; and,
- optionally one or more fillers or additives.

In some embodiments, the crystallinity of the three-dimensional part obtained at the end of the printing process does not exceed 5%wt as measured by X-Ray diffraction. That is to say, the three-dimensional part is pseudo-amorphous. It is preferred to select the composition so it may stay in a pseudo-amorphous state until the end of the printing process.

In some embodiments, the additive manufacturing process the average coefficient of linear thermal expansion of the composition is equal to about 6.10⁻⁵ K⁻¹ or less, preferably equal to about 4.10⁻⁵ K⁻¹ or less, and even more preferably equal to about 3.10⁻⁵ K⁻¹, measured between -100°C and the glass transition temperature of the composition, according to ISO 11359-2.

The invention also relates to a filament made of a composition comprising at least one poly-aryl-ether-ketone (PAEK), wherein the melt viscosity of the composition is from about 200 Pa.s to about 1500 Pa.s, according to ASTM D3835-16, measured at a temperature of 320°C and at a shear rate of 100 s⁻¹, by capillary rheology using a 1 mm diameter, 15 mm long die. In particular, the filament is suitable to be used in the additive manufacturing process as described above and all possible limitations of the composition comprising at least one poly-aryl-ether-ketone (PAEK) described for the additive manufacturing process may be applied to the filament as such.

The invention also relates to the use of said filament in an additive manufacturing process by extrusion for forming a three-dimensional part, wherein the extrusion temperature is equal to about 340°C or less. In some embodiments, the filament is used in the process according to the invention.

The invention finally relates to an object obtainable by the additive manufacturing process described above.

### DESCRIPTION OF PREFERRED EMBODIMENTS

### Composition comprising on poly-aryl-ether-ketone(s)

The poly-aryl ether ketone(s) (PAEK(s)) of the composition according to the invention comprise(s) units of the following formulas:

(-Ar-X-) and (-Ar₁-Y-),

wherein:
- Ar and Ar₁ each denote a divalent aromatic radical; Ar and Ar₁ may be preferably selected from 1,3-phenylene, 1,4-phenylene, 4,4'-biphenylene, 1,4-naphthylene, 1,5-naphthylene and 2,6-naphthylene;
- X designates an electron-withdrawing group; X may be preferably selected from a carbonyl group and a sulfonyl group; and
- Y designates a group selected from an oxygen atom, a sulphur atom, an alkylene group, such as -CH₂- and isopropylidene.
In these units X and Y, at least 50 percent, preferably at least 70 percent, and more particularly at least 80 percent of the groups X are a carbonyl group, and at least 50 percent, preferably at least 70 percent, and more particularly at least 80 percent of the groups Y represent an oxygen atom. According to a preferred embodiment, 100 percent of the groups X denote a carbonyl group and 100 percent of the groups Y denote an oxygen atom.

The composition according to the invention comprises PAEK(s). The weight of PAEK or, if relevant, the sum of the weights of PAEKs of the composition, generally represents at least 50% of the total weight of the composition. In some embodiments, the weight of poly-aryl-ether-ketone(s) may represent at least 60%, or at least 70%, or at least 80%, or at least 85%, or at least 90%, or at least 92.5%, or at least 95%, or at least 97.5%, or at least 98%, or at least 98.5%, or at least 99% or at least 99.5% of the total weight of the composition. In some specific embodiments, the composition consists essentially of, preferably consisting of PAEK(s): the weight of PAEK(s) represents approximately 100% of the total weight of composition.

Advantageously, the PAEK(s) in the composition may be chosen from:
- a poly-ether-ketone-ketone, also noted "PEKK"; a PEKK comprises one repeating unit or more of formula: -Ph-O-Ph-C(O)-Ph-C(O)-;
- a poly-ether-ether-ketone, also noted "PEEK"; a PEEK comprises one repeating unit or more of formula: -Ph-O-Ph-O-Ph-C(O)-;
- a poly-ether-ketone, also noted "PEK"; a PEK comprises one repeating unit or more of formula: -Ph-O-Ph-C(O)-;
- a poly-ether-ether-ketone-ketone, also noted "PEEKK"; a PEEKK comprises one unit or more of formula: -Ph-O-Ph-O-Ph-C(O)-Ph-C(O)-;
- a poly-ether-ether-ether-ketone, also noted "PEEEK"; a PEEEK comprises one unit or more of formula: -Ph-O-Ph-O-Ph-O-Ph-C(O) -;
- a poly-ether-diphenyl ether-ketone also called PEDEK; a PEDEK comprises a unit (s) of formula: a PEDEK comprises a unit (s) of formula - Ph-O-Ph-Ph-O-Ph-C(O) -;
- their blends; and/or
- their copolymers;
wherein Ph represents a phenylene group and -C(O)- a carbonyl group, each of the phenylenes being independently ortho- (1-2), meta- (1-3) or para- (1-4) substituted, preferentially meta- or para-substituted.
In addition, defects, end groups and / or monomers may be incorporated in a very small amount in the polymers as described in the above list, without affecting their performance.

In some embodiments, the composition comprises at least one PEKK. The PEKK may be a copolymer, in particular a random copolymer, comprising, preferentially consisting essentially of, and more preferably consisting of isophthalic units ("I"), of formula: 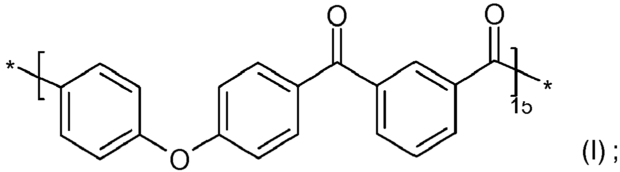 and, terephthalic units ("T"), of formula:

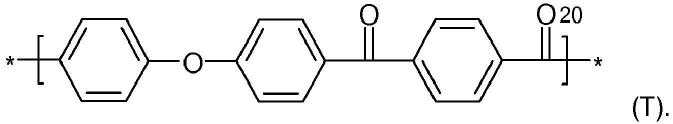

The molar ratio of terephthalic unit to isophthalic and terephthalic units (T:T+I) may be from 0 to 5%; or 5 to 10%; or 10 to 15%; or 15 to 20%; or 15 to 20%; or from 20 to 25%; or 25 to 30%; or from 30 to 35%; or 35 to 40%; or 40 to 45%; or 45 to 50%; or 50 to 55%; or 55 to 60%; or 60 to 65%; or 65 to 70%; or 70 to 75%; or 75 to 80%; or 80 to 85%; or 85 to 90%; or 90 to 95%; or 95 to 100%. The choice of the molar ratio of T units relative to the sum of T and I units makes it possible to adjust the melt temperature of PEKK and its crystallization rate at a given temperature. A random PEKK copolymer with a specific T:I ratio may be produced by adjusting the respective concentrations of the reactants during the polymerization, in a manner known *per se.*

Advantageously, the composition may comprise at least one PEKK having a T:I ratio from 55:45 to 65:35. Indeed, for this range of T:I ratio, the melt temperature is less than 330°C and the crystallization half-time of PEKK at 215°C, as measured according to ISO 11357, section 7, is from about 5 minutes to about 30 minutes. In particular, the PEKK copolymer may have a T:I ratio of from 58:42 to 62:38 and preferably of about 60:40.

In some embodiments, the composition may comprise a blend of different random copolymers of PEKKs. In particular, the composition may comprise a mixture of different copolymers of PEKKs having different T:I ratios. The composition may also comprise a mixture of different copolymers of PEKKs having different viscosities. Finally, the composition may also comprise a mixture of different copolymers of PEKKs having both different T:I ratios and different viscosities.

In some embodiments, the composition comprises at least one PEEK-PEDEK copolymer. The PEEK-PEDEK may be a copolymer, in particular a random copolymer, comprising, preferably consisting essentially of, and more preferably consisting of:
- unit(s) of formula: Ph-O-Ph-O-Ph-C(O)- (III); and,
- unit(s) of formula: Ph-O-Ph-Ph-O-Ph-C(O)- (IV);
wherein Ph is a phenylene group and -C(O)- is a carbonyle group, wherein each one of the phenylene groups may independently be ortho-, meta- or para-substituted, preferentially meta- or para-substituted.

The molar ratio of repeating unit (III) to units (III) and (IV) (III:III+IV) in the PEEK-PEDEK may be of from 0 to 5%; or 5 to 10%; or 10 to 15%; or 15 to 20%; or 15 to 20%; or from 20 to 25%; or 25 to 30%; or from 30 to 35%; or 35 to 40%; or 40 to 45%; or 45 to 50%; or 50 to 55%; or 55 to 60%; or from 60 to 65%; or from 65 to 70%; or 70 to 75%; or from 75 to 80%; or from 80 to 85%; or from 85 to 90%; or from 90 to 95%; or from 95 to 100%. The choice of the molar ratio of unit (III) to units (III) and (IV) makes it possible to adjust the melt temperature of PEEK-PEDEK and its crystallization rate at a given temperature. A random PEEK-PEDEK copolymer with a specific ratio of repeating unit (III): repeating unit (IV) may be produced by adjusting the respective concentrations of the reactants during the polymerization, in a manner known per se.

In some embodiments, the composition comprises a blend of different copolymers of PEEK-PEDEKs. In particular, the composition may comprise a mixture of different copolymers of PEEK-PEDEKs having a different molar ratio of repeating unit (III) : repeating unit (IV). The composition may also comprise a mixture of different copolymers of PEEK-PEDEKs having a different melt viscosity. Finally, the composition may comprise a mixture of different copolymers of PEEK-PEDEKs having a different molar ratio of repeating unit (III) : repeating unit (IV) and a different melt viscosity.

In some embodiments, the composition comprises at least two types of PAEKs, more particularly a PEKK, and in addition to the PEKK, at least one of the following polymers: PEK, PEEKEK, PEEK, PEEKK, PEKEKK, PEEEK, PEDEK, and PEEK-PEDEK. The polymer(s) in addition to the PEKK may represent less than 50% by weight of the total weight of the composition, and preferably less than 30% by weight of the composition.

The composition may especially comprise a mixture of PEEK(s) and PEKK(s), wherein PEEK essentially consists of, preferably consists of: repeating units of formula (III), and wherein PEKK essentially consists of, preferably consists of, isophthalic and terephthalic units. The advantage to combine a PEEK with a PEKK, especially a PEKK having a T:T+I ratio of less than 65%, or less than 55%, or less than 45 %, is that it enables to accelerate the crystallization rate of the composition, compared to the crystallization rate of the same PEKK considered alone, at a given temperature. Conversely, the advantage of associating a PEKK with a PEEK, especially a PEKK having a T:T+I ratio of less than 65%, or less than 55%, or less than 45%, is that it enables to slow down crystallization rate of the composition compared to the crystallization rate of the PEEK considered alone, at a given temperature.

The melt viscosity of the composition at 320°C and at a shear rate of 100 s⁻¹, by capillary rheology using a 1 mm diameter, 15 mm long die, is from about 200 to about 1500 Pa.s. The range of melt viscosities of the composition comprising at least one poly-aryl-ether-ketone (PAEK) enables to carry out the process at a relatively low extrusion temperature, namely a temperature equal to about 340°C or less, and at a relatively low build environment temperature. This selection corresponds to unusual conditions compared to what is generally carried out in typical processes used until now, which typically perform better at a higher extrusion temperature than the one claimed herein. A three-dimensional part having a correct dimensioning and substantially no warping may be obtained. The melt viscosity of the composition is from about 400 to about 1100 Pa.s, as measured at a temperature of 320°C and at a shear rate at 100s⁻¹ by capillary rheology using a 1 mm diameter, 15 mm long die.
These viscosities may be obtained by having a composition comprising, if relevant, a melt viscosity-controlling agent in addition to the major PAEK, in molar proportion. The melt viscosity-controlling agent may be another PAEK having a different melt viscosity than the major PAEK. The composition may comprise additives or fillers as described below in order to increase its melt viscosity. The composition may comprise a plasticizer in order to reduce its melt viscosity. Plasticizers compatible with many PAEKs, in particular PEKKs, are, for example, diphenylsulfone or 1,4-bis (4-phenoxybenzoyl)benzene.

The composition may have an inherent viscosity, as measured according to ISO 307 in an aqueous solution of 96% by weight sulfuric acid at 25°C, from about 0.1 dL/g to about 0.7 dL / g, preferably from about 0.15 to about 0.5 dL/g, and more preferably of from about 0.2 to about 0.4 dL/g. In particular, the composition may essentially consist of, preferably consist of, PEKK(s) having a T:T+1 ratio of from 55% to 65%, and have an inherent viscosity, of from 0.1 dL/g to 0.7 dL/g.

The half-crystallization time of the composition at Tg+55°C may be of from about 1 minute to about 60 minutes. If the crystallization half-time of the composition at Tg+55°C is more than about 60 minutes, any post print crystallization process would be prohibitively long. If the crystallization half-time of the composition at Tg+55°C is less than about 1 minute, it may crystalize upon cooling, resulting in warping or poor layer adhesion. Advantageously, the crystallization half-time of the composition at Tg+55°C is from about 3 minutes to about 45 minutes and preferably from about 5 minutes to about 30 minutes.

A composition having such crystallization half-time at Tg+55°C may be obtained by including in the composition a crystallization rate-controlling agent, if relevant, in addition to the major PAEK, in molar proportion. The composition may contain an amorphous polymer in order to slow down its crystallization rate at Tg+55°C. The amorphous polymer may be a PAEK or not. An amorphous polymer compatible with many PAEKs, in particular PEKK, is for instance a polyetherimide. The composition may contain one or more filler(s) / additive(s), as described below, acting as nucleant(s), in order to increase its crystallization rate at Tg+55°C,

The composition may be semi-crystalline. It may have a melt temperature equal to about 330 °C or less, preferably equal to about 320 °C or less, and even more preferably equal to about 310 °C or less. The melt temperature of the composition may be from about 290°C to about 320°C, as measured according to ISO 11357, section 3.

The composition may comprise one or more other polymers not belonging to the family of PAEKs, especially other thermoplastic polymers.

The composition may also comprise additives and / or fillers.
The fillers may in particular be reinforcing fillers, including mineral fillers such as carbon black, carbon or non-carbon nanotubes, crushed or non-crushed fibers (glass, carbon). The composition comprising PAEK(s) may comprise less than about 50% by weight of filler, and preferably less than 40% by weight of filler relative to the total weight of composition.

The additives may in particular be stabilizing agents (light, in particular UV, and heat such as phosphates), optical brighteners, dyes, pigments, energy-absorbing additives (including UV absorbers), melt viscosity-controlling agents, crystallization rate-controlling agents or a combination of these additives.
The composition may comprise less than 10%, preferably less than 5%, and more preferably less than 1% by weight of additives.

The composition is suitable for being printed in an extrusion (for example, fused filament fabrication) style 3D printer, with or without filaments.

The composition may be in the form of filaments or pellets, generally formed by extrusion, or may be in the form of powder or flakes.

In particular, the composition may be in the form of a filament comprising it, preferably made essentially of it and more preferably made of it. All possible limitations of the composition comprising at least one poly-aryl-ether-ketone (PAEK) described above may be applied to the filament comprising the at least one poly-aryl-ether-ketone as such.

For fused filament fabrication, the filaments may be of any size diameter, including diameters from about 0.6 to about 3mm, preferably diameters from about 1.7 to about 2.9 mm, more preferably diameters from about 1.7 mm to about 2.8 mm, as measured with an unweighted caliper.

### Additive manufacturing process by extrusion

A device useful for an additive manufacturing process by extrusion generally comprises all or some of the following components:
(1) consumable material in the ready to print form (filament, pellets, powder, flakes, or polymer solution as specified by the printer);
(2) a device feeding the material to the print head;
(3) one or more print heads with a nozzle that can be heated up or cooled to a specified temperature for extruding of the melted material;
(4) a print bed or substrate which may or may not be heated, where the part is being built/printed; and
(5) a build environment surrounding the print bed and the object being printed which may or may not be heated or which may or may not be temperature controlled. The build environment may either be fully or partially enclosed forming a chamber, or open to the environment.

Generally, the extrusion printing process comprises one or more of the following steps:
(1) feeding the composition comprising PAEKs in the form of filament, pellets, powder, flakes, or polymer solution into a 3D printer, the parts of which may or may not be heated to one or more predetermined temperatures;
(2) setting the computer controls of the printer to provide a set volume flow of material, and to space the printed lines at a certain spacing;
(3) feeding the composition to a heated nozzle at an appropriate set speed which may be pre-determined; and
(4) moving the nozzle into the proper position for depositing a set or predetermined amount of composition; and
(5) optionally adjusting the temperature of the build environment.

The extrusion melting process of the invention is carried out at an extrusion temperature equal to about 340°C or less. In particular, the extrusion temperature may be equal to about 340°C or less, preferentially equal to about 330°C or less, and even more preferentially equal to about 320°C or less. For compositions comprising PAEKs as the one used in the invention, the extrusion temperature is generally not less than about 300°C, preferably not less than 300°C. The feed into the printer has a melt viscosity from 200 to 1500 Pa.s, according to ASTM D3835-16, as measured at a temperature of 320°C and at a shear rate of 100 s⁻¹, by capillary rheology using a 1 mm diameter, 15 mm long die. For these ranges of melt viscosities, it may be possible to operate the process at room temperature, i.e. with no heated print bed and/or no heated build environment.
Advantageously, the print bed may be heated to a temperature:
- from about Tg-60°C to about Tg+5°C;
- preferably from about Tg-30°C to about Tg;
- and even more preferably from about Tg-20°C to about Tg-5°C;
wherein Tg is the glass transition temperature of the composition.
For a composition essentially consisting of, preferentially consisting of PEKK having a T:T+I ratio of 60%, Tg is around 160°C, meaning that the print bed temperature may be chosen from about 100°C to about 165°C, or from about 130°C to about 160°C, or from about 140°C to about 155°C.This enables to promote adhesion of the first extruded layer on the print bed and to minimize the effects of contraction upon cooling since the first layer can be maintained at a high temperature for the entire build process.

The build environment may be actively or passively heated. An actively heated build environment has supplemental heating elements and controls beyond the heated bed that control the air temperature inside the build environment. A passively heated chamber has no controls, but uses the heat from the heated print bed and the nozzle(s) to increase the air temperature in the build environment. Advantageously, the build environment is passively heated, as the temperature of the build environment during the process may not exceed 85°C, or preferably may not exceed 70°C, or even more preferably may not exceed 60°C.

The process may take place in air, or under an inert gas such as nitrogen, if the printer makes it possible to control the composition of the gas within the build environment.

The process may take place at atmospheric pressure or at pressures below if the printer makes it possible to control the pressure within the build environment.

The 3-D printer may be programmed to operate at about 105 to about 130 % overflow in order to reduce the internal void content, and improve overall part quality. This means that the volume of thermoplastic polymer composition fed by the printer is higher than the calculated volume required for the 3-D article being formed. Overflow may be controlled to result in a denser and mechanically stronger part. Overflow also helps to compensate for shrinkage, while increasing the strength and mechanical properties of the printed article. The overflow may be set by at least two different methods. In the first method, the software/printer is set to feed a higher percent of material into the nozzle than would be normally needed. In the second method, the software/printer may be set to decrease the spacing between lines, and thus create an overlap in the lines, resulting in extra material being used to print the article.

Process parameters of the 3-D printer may be adjusted to minimize shrinkage and warping, and to produce 3-D printed parts having optimum strength and elongation. The use of selected process parameters applies to any extrusion/melt 3D printer, and preferably to filament printing (e.g. FFF).

The print (head) speed may be between about 6 to about 200 mm/sec.

The thickness of each print layer may be from about 0.10mm to about 4 mm.

The process may also comprise a post-crystallization step of the printed part in order to increase the crystallinity of the printed part to a desired level by heating it at a temperature over the glass transition temperature of the composition for a certain amount of time.

An advantage of the present invention is the ability to print dimensionally stable (low warping) items using simple and low cost equipment, commonly called "desktop printers". These printers operating at "low" extrusion temperature and at "low" build environment temperature do not require special high powered heater or specifically designed thermal isolation. Moreover, the build chamber temperature does not require sophisticated design, materials, and heat management systems, lowering overall printer cost. Printers as the one used to print polylactic acid and/or acrylonitrile butadiene styrene may generally be suitable to carry out the process of the invention provided their nozzle can reach the suitable extrusion temperature. As a matter of fact, these desktop printers may come equipped with nozzles capable of reaching temperatures in excess of 300°C, which may even reach the temperature required in the additive manufacturing process of the invention. In that case, no upgrade of the nozzle is required. For printers with extrusion heads only capable of reaching temperatures below that required for the process of the invention, there are a number of commonly available aftermarket upgrade kits compatible with most printers.

A non-exhaustive list of suitable desktop printers which may be used in the process of the invention are : "Ultimaker 2+" and "Ultimaker S5", commercialized by Ultimaker BV; "MakerBot Replicator+", commercialized by MakerBot Industries; "FlashForge Creator Pro 2017" commercialized by FlashForge Corporation; "LulzBot Mini" and "LulzBot Taz 6", commercialized by Aleph Obbects Inc. and "PRUSA I3 MK2S", commercialized by Prusa Research.

A common example of aftermarket upgrade kits compatible with most printers is the "E3Dv6" hot end assembly commercialized by E3D. This upgrade can easily reach the temperatures required for this invention.

### Experimental data

Filaments, having a 2.85 mm diameter, and made of PEKK copolymers with a 60:40 T:I having different melt viscosities, according to ASTM D3835-16, measured at a temperature of 320°C and at a shear rate of 100 s⁻¹, by capillary rheology using a 1 mm diameter, 15 mm long die, were used. ASTM D638 tensile specimens of type IV were printed in the horizontal (XY-axis) and vertical orientations (Z-axis) using a "FUNMAT HT" commercialized by the company INTAMSYS. The printer was equipped with an enclosed chamber, active heating, and a high temperature nozzle. However, for the experiment, the chamber was left open and the chamber heater disabled. The nozzle temperature was set to 320°C and the print speed was fixed at 20 mm/sec.

In example 1, a PEKK having an inherent viscosity of 1.05 dL/g, as measured according to ISO 307 in an aqueous solution of 96% by weight sulfuric acid at 25°C, was used. The melt viscosity of the filament thereof was approximately 2000 Pa.s.

In example 2, a PEKK having an inherent viscosity of 0.8 dL/g, as measured according to ISO 307 in an aqueous solution of 96% by weight sulfuric acid at 25°C, was used. The melt viscosity of the filament thereof was approximately 1700 Pa.s.

In example 3, a PEKK having an inherent viscosity of 0.7 dL/g, as measured according to ISO 307 in an aqueous solution of 96% by weight sulfuric acid at 25°C, was used. The melt viscosity of the filament thereof was approximately 580 Pa.s.

It was not possible to use the filament of example 1 to print at 320°C due its too high viscosity at 320°C. The test was considered a failure. Example 1 is not according to the invention.

The filaments of example 2 and example 3 were successfully extruded. Tensile testing data for the specimens type IV according to ASTM D638 are shown in Table 1 below:

**Table 1**

| | | Tensile modulus (MPa) | Max Stress (MPa) | Strain at yield (%) | Strain at break (%) |
|---|---|---|---|---|---|
| Example 2 | X/Y | 3000 | 86 | 5.80 | 8.7 |
| | Z | 3600 | 31 | N/A | 1.0 |
| Example 3 | X/Y | 2800 | 88.5 | 6.25 | 64.1 |
| | Z | 2700 | 41 | N/A | 1.6 |

The specimen of example 2, not according to the invention, showed some signs of warping visible to the naked eye as the surface of the specimen did not appear to be completely flat. On the contrary, the specimen of example 3, according to the invention did not show any sign of warping to the naked eye as the surface of the specimen appeared to be completely flat. As can be seen from the tensile data from table 1, the specimen from example 3 has better mechanical properties than the one of example 2 along X/Y directions or Z direction as indicated by the higher values of maximum stress, strain at yield and strain at break.

The PEKK copolymer with a 60:40 T:I ratio, as the one presently used is particularly advantageous, as it has: a melt temperature of around 305°C, a half-time crystallization of around 10 minutes at 215°C and a coefficient of linear thermal expansion between -100°C and the glass transition temperature of the composition of 2,65.10⁻⁵ K⁻¹. This low coefficient of linear thermal expansion enables to substantially mitigate any warping of the part under construction even though the build environment is not actively heated.

Filaments of pure PEEK can not be used in the process of the claimed invention as they have a melting temperature of around 343°C and cannot be extruded at a temperature equal to 340°C or less. However, filaments made of a composition containing PEEK and having the properties as claimed herein may be used in the process according to the invention. It is however thought that compositions containing PEEK would be more prone to warping than PEKK copolymer with a 60:40 T:I ratio, as PEEK has a higher coefficient of linear thermal expansion, measured according to ISO 11359-2, as it is equal to around: 4,5.10-5 K⁻¹.

## Claims

1. An additive manufacturing process by extrusion for forming a three-dimensional part in an additive manufacturing machine having a build environment, the process comprising:
- i) providing a composition comprising at least one poly-aryl-ether-ketone (PAEK) having a melt viscosity from about 200 Pa.s to about 1500 Pa.s, according to ASTM D3835-16, measured at a temperature of 320°C and at a shear rate of 100 s⁻¹, by capillary rheology using a 1 mm diameter, 15 mm long die;
- ii) extruding the composition in the build environment at an extrusion temperature equal to about 340°C or less, to form an extruded part section; and,
- iii) cooling the extruded part section in the build environment.

2. The additive manufacturing process of claim 1, wherein the melt viscosity of the composition is from about 400 to about 1100 Pa.s, as measured at a temperature of 320°C and at a shear rate at 100s⁻¹ by capillary rheology using a 1 mm diameter, 15 mm long die.

3. The additive manufacturing process of any of claims 1 to 2, wherein the composition is extruded at a temperature of about 330°C or less and preferentially of about 320°C or less.

4. The additive manufacturing process of any of claims 1 to 3, wherein the melt temperature of the composition is from about 290°C to about 320°C, as measured according to ISO 11357, section 3.

5. The additive manufacturing process of any of claims 1 to 4, wherein the composition has a crystallization half-time at Tg+55°C, as measured according to ISO 11357, section 7:
- from about 1 minute to about 60 minutes;
- preferably from about 3 minutes to about 45 minutes; and
- even more preferably from about 5 minutes to about 30 minutes;
wherein Tg is the glass transition temperature of the composition, as measured according to ISO 11357, section 2.

6. The additive manufacturing process of any of claims 1 to 5, wherein the additive manufacturing machine does not contain any means for actively heating the build environment.

7. The additive manufacturing process of any of claims 1 to 6, wherein the temperature of the build environment during the process does not exceed 85°C, or preferably does not exceed 70°C, or even more preferably does not exceed 60°C.

8. The additive manufacturing process of any of claims 1 to 7, wherein the additive manufacturing machine comprises a print bed placed in the build environment, which is suitable for supporting the three-dimensional part under construction and suitable for adhering to it, wherein the temperature of the print bed being during at least part of the process is:
- from about Tg-60°C to about Tg+5°C;
- preferably from about Tg-30°C to about Tg;
- and even more preferably from about Tg-20°C to about Tg-5°C;
wherein Tg is the glass transition temperature of the composition, as measured according to ISO 11357, section 2.

9. The additive manufacturing process of any of claims 1 to 8, wherein the at least one poly-aryl-ether-ketone represents at least 50% to up to 100% by weight of the composition;
and preferably wherein the at least one poly-aryl-ether-ketone represents at least 75%, or at least 80%, or at least 85%, or at least 90%, or at least 92,5%, or at least 95%, or at least 97,5%, or at least 98%, or at least 98,5%, or at least 99%, or at least 99,5% by weight of the total weight of the composition.

10. The additive manufacturing process of any of claims 1 to 9, wherein the at least one poly-aryl-ether-ketone is a random poly-ether-ketone-ketone copolymer which consists essentially of, preferably consists of, two monomeric units having the formula: 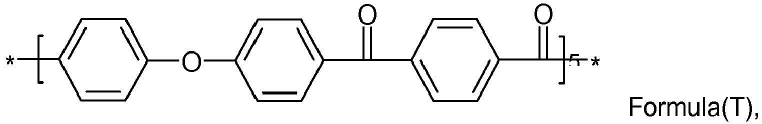 and 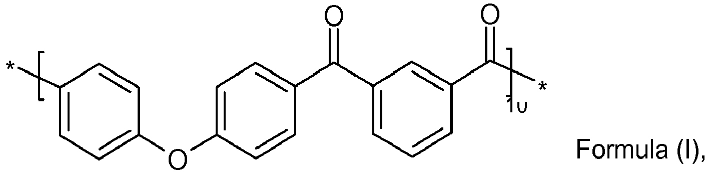
wherein the copolymer has a T:I ratio from 55:45 to 65:35;
preferably, wherein the copolymer has a T:I ratio from 58:42 to 62:38;
and even more preferably, wherein the copolymer has a T:I ratio of about 60:40.

11. The additive manufacturing process of any of claims 1 to 9, wherein the at least one poly-aryl-ether-ketone is a poly[(ether-ether-ketone)-ran-(ether-biphenyl-ether-ketone)] which consists essentially of, preferably consists of, monomeric units having the formula: :
- unit(s) of formula : Ph-O-Ph-O-Ph-C(O)- and,
- unit(s) of formula : Ph-O-Ph-Ph-O-Ph-C(O)-,
wherein Ph is a phenylene group and -C(O)- is a carbonyle group, wherein each one of the phenylene groups may independently be ortho-, meta- or para-substituted, preferentially meta- or para-substituted.

12. The additive manufacturing process of claim 10, wherein the composition has an inherent viscosity, as measured according to ISO 307 in an aqueous solution of 96% by weight sulfuric acid at 25°C, from about 0.1 to about 0.7 dL/g; preferably from about 0.15 to about 0.5 dL/g;
and more preferably of from about 0.2 to about 0.4 dL/g.

13. The additive manufacturing process of any one of claims 1 to 12, wherein the composition consists essentially of, and preferentially consists of:
- the at least one poly-aryl-ether-ketone; and,
- optionally one or more fillers and/or additives.

14. The additive manufacturing process of any one of claims 1 to 13, wherein the crystallinity of the three-dimensional part obtained at the end of the process does not exceed 5%wt as measured by X-Ray diffraction.

15. The additive manufacturing process of any one of claims 1 to 14, wherein the average coefficient of linear thermal expansion is equal to about 6.10⁻⁵ K⁻¹ or less, preferably equal to about 4.10⁻⁵ K⁻¹ or less, and even more preferably equal to about 3.10⁻⁵ K⁻¹, measured between 20°C and the glass transition temperature of the composition, according to ISO 11359-2.

16. Filament comprising a composition comprising at least one poly-aryl-ether-ketone (PAEK), wherein the melt viscosity of the composition is from about 200 Pa.s to about 1500 Pa.s, according to ASTM D3835-16, measured at a temperature of 320°C and at a shear rate of 100 s⁻¹, by capillary rheology using a 1 mm diameter, 15 mm long die.

17. Use of a filament according to claim 16 in an additive manufacturing process by extrusion for forming a three-dimensional part, wherein the extrusion temperature is equal to about 340°C or less.

18. An object obtainable by the additive manufacturing process of anyone of claims 1 to 15.
